# EUROPEAN PATENT SPECIFICATION

(11) **EP 2 870 346 B1**
(45) Date of publication and mention of the grant of the patent: **25.04.2018**
(21) Application number: 13812467.2
(22) Date of filing: 26.06.2013
(51) Int. Cl.: F02C 9/00, F02C 7/00, F02C 9/16, F01D 21/00, G05B 23/02

(54) **ADVANCED TIP-TIMING MEASUREMENT BLADE MODE IDENTIFICATION**
ERKENNUNG EINES ERWEITERTEN SPITZENTAKTMESSUNGSMODUS EINER SCHAUFEL
IDENTIFICATION DE MODE DE PALE À MESURE DE SYNCHRONISATION DE POINTE AVANCÉE

(30) Priority: 03.07.2012 US 201213541197
(43) Date of publication of application: 13.05.2015
(73) Proprietor: United Technologies Corporation, Farmington, CT 06032 (US)
(72) Inventor: KHIBNIK, Alexander I., Glastonbury, Connecticut 06033 (US); HALL, Benjamin D., Glastonbury, Connecticut 06033 (US)
(74) Representative: Hull, James Edward
(86) International application number: PCT/US2013/047748
(87) International publication number: WO 2014/008051

(56) References cited:
- EP-A2- 1 857 637
- US-A1- 2002 103 547
- US-A1- 2007 245 708
- US-A1- 2009 301 055
- US-A1- 2010 161 245
- US-A1- 2011 213 569
- US-A1- 2011 219 741
- US-A1- 2011 293 403

## Description

### BACKGROUND

This disclosure is generally directed to a system and method of determining a condition of a rotating airfoil.

A gas turbine engine typically includes a fan section, a compressor section, a combustor section and a turbine section. Air entering the compressor section is compressed and delivered into the combustion section where it is mixed with fuel and ignited to generate a high-speed exhaust gas flow. The high-speed exhaust gas flow expands through the turbine section to drive the compressor and the fan section.

Engines undergo scheduled inspections and maintenance to determine overall engine health. Fan blades are examined during such inspections to determine overall blade health. However, physical access to the fan blades can make inspections difficult, expensive and time consuming. Blade health monitoring systems utilize sensors that detect a passing fan blade and provide some information on blade health. Current systems provide limited information and therefore turbine engine manufacturers continue to seek further improvements in blade health monitoring systems.

A prior art method having the features of the preamble to claim 1 is disclosed in US-2009/0301055. US-2011/0213569 and EP-1857637 disclose prior art methods of detecting cracks in airfoils.

### SUMMARY

From one aspect, the present invention provides a method of monitoring a condition of a rotating airfoil according to claim 1.

In an embodiment of the foregoing method, the at least two features of the waveform include a time of arrival of an airfoil based on the signal.

In a further embodiment of any of the foregoing methods, the at least two features include a slope of the signal at a zero crossing point.

In a further embodiment of any of the foregoing methods, the at least two features of the waveform include a time of positive and negative peaks of the signal.

In a further embodiment of any of the foregoing methods, includes determining a magnitude of the positive and negative peaks.

In a further embodiment of any of the foregoing methods, includes determining a distance between the sensor and a tip of the airfoil based on a value of the slope of the signal at the zero crossing point.

In a further embodiment of any of the foregoing methods, includes determining a distance between the positive peak and the negative peak and identifying the vibrational mode based in part on the determined distance.

In a further embodiment of any of the foregoing methods, the rotating airfoil comprises a fan blade and including mounting at least one point sensor proximate to a tip of the fan blade.

From another aspect, the present invention provides a system for identifying vibratory modes of a rotating airfoils according to claim 9.

In an embodiment of the foregoing system, the model includes a database of information derived from previously obtained signals indicative of an airfoil rotational path.

In a further embodiment of any of the foregoing systems, the sensor comprises a sensor mounted radially outward of an airfoil tip path.

In a further embodiment of any of the foregoing systems, the sensor is mounted to sense a portion of a tip a distance from one of a leading edge and trailing edge of the airfoil.

In a further embodiment of any of the foregoing systems, the first module further determines a magnitude of the positive and negative peaks.

From yet another aspect, the present invention provides a gas turbine engine according to claim 12.

Although the different examples have the specific components shown in the illustrations, embodiments of this disclosure are not limited to those particular combinations. It is possible to use some of the components or features from one of the examples in combination with features or components from another one of the examples.

These and other features disclosed herein can be best understood from the following specification and drawings, the following of which is a brief description.

### BRIEF DESCRIPTION OF THE DRAWINGS

Figure 1 is a schematic view of an example gas turbine engine.
Figure 2 is a schematic representation of a blade orientation relative to an example sensor.
Figure 3 is a graph representing several signals indicative of a fan blade path past the example sensor.
Figure 4 is a schematic view of an example signal indicative of a fan blade path.
Figure 5 is a schematic view of an example blade health monitoring system.

### DETAILED DESCRIPTION

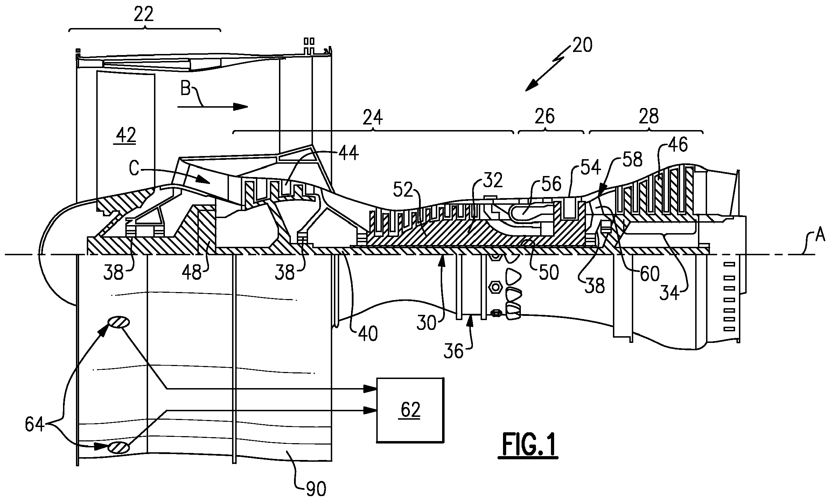

Figure 1 schematically illustrates an example gas turbine engine 20 that includes a fan section 22, a compressor section 24, a combustor section 26 and a turbine section 28. Alternative engines might include an augmenter section (not shown) among other systems or features. The fan section 22 drives air along a bypass flow path B while the compressor section 24 draws air in along a core flow path C where air is compressed and communicated to a combustor section 26. In the combustor section 26, air is mixed with fuel and ignited to generate a high pressure exhaust gas stream that expands through the turbine section 28 where energy is extracted and utilized to drive the fan section 22 and the compressor section 24.

Although the disclosed non-limiting embodiment depicts a turbofan gas turbine engine, it should be understood that the concepts described herein are not limited to use with turbofans as the teachings may be applied to other types of turbine engines; for example a turbine engine including a three-spool architecture in which three spools concentrically rotate about a common axis and where a low spool enables a low pressure turbine to drive a fan via a gearbox, an intermediate spool that enables an intermediate pressure turbine to drive a first compressor of the compressor section, and a high spool that enables a high pressure turbine to drive a high pressure compressor of the compressor section.

The example engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided.

The low speed spool 30 generally includes an inner shaft 40 that connects a fan 42 and a low pressure (or first) compressor section 44 to a low pressure (or first) turbine section 46. The inner shaft 40 drives the fan 42 through a speed change device, such as a geared architecture 48, to drive the fan 42 at a lower speed than the low speed spool 30. The high-speed spool 32 includes an outer shaft 50 that interconnects a high pressure (or second) compressor section 52 and a high pressure (or second) turbine section 54. The inner shaft 40 and the outer shaft 50 are concentric and rotate via the bearing systems 38 about the engine central longitudinal axis A.

A combustor 56 is arranged between the high pressure compressor 52 and the high pressure turbine 54. In one example, the high pressure turbine 54 includes at least two stages to provide a double stage high pressure turbine 54. In another example, the high pressure turbine 54 includes only a single stage. As used herein, a "high pressure" compressor or turbine experiences a higher pressure than a corresponding "low pressure" compressor or turbine.

The example low pressure turbine 46 has a pressure ratio that is greater than about 5. The pressure ratio of the example low pressure turbine 46 is measured prior to an inlet of the low pressure turbine 46 as related to the pressure measured at the outlet of the low pressure turbine 46 prior to an exhaust nozzle.

A mid-turbine frame 58 of the engine static structure 36 is arranged generally between the high pressure turbine 54 and the low pressure turbine 46. The mid-turbine frame 58 further supports bearing systems 38 in the turbine section 28 as well as setting airflow entering the low pressure turbine 46.

The core airflow C is compressed by the low pressure compressor 44 then by the high pressure compressor 52 mixed with fuel and ignited in the combustor 56 to produce high speed exhaust gases that are then expanded through the high pressure turbine 54 and low pressure turbine 46. The mid-turbine frame 58 includes vanes 60, which are in the core airflow path and function as an inlet guide vane for the low pressure turbine 46. Utilizing the vane 60 of the mid-turbine frame 58 as the inlet guide vane for low pressure turbine 46 decreases the length of the low pressure turbine 46 without increasing the axial length of the mid-turbine frame 58. Reducing or eliminating the number of vanes in the low pressure turbine 46 shortens the axial length of the turbine section 28. Thus, the compactness of the gas turbine engine 20 is increased and a higher power density may be achieved.

The disclosed gas turbine engine 20 in one example is a high-bypass geared aircraft engine. In a further example, the gas turbine engine 20 includes a bypass ratio greater than about six (6), with an example embodiment being greater than about ten (10). The example geared architecture 48 is an epicyclical gear train, such as a planetary gear system, star gear system or other known gear system, with a gear reduction ratio of greater than about 2.3.

In one disclosed embodiment, the gas turbine engine 20 includes a bypass ratio greater than about ten (10:1) and the fan diameter is significantly larger than an outer diameter of the low pressure compressor 44. It should be understood, however, that the above parameters are only exemplary of one embodiment of a gas turbine engine including a geared architecture and that the present disclosure is applicable to other gas turbine engines.

A significant amount of thrust is provided by the bypass flow B due to the high bypass ratio. The fan section 22 of the engine 20 is designed for a particular flight condition -- typically cruise at about 0.8 Mach and about 35,000 feet (10,668 m). The flight condition of 0.8 Mach and 35,000 ft. (10,668 m), with the engine at its best fuel consumption - also known as "bucket cruise Thrust Specific Fuel Consumption ('TSFC')" - is the industry standard parameter of pound-mass (lbm) of fuel per hour being burned divided by pound-force (lbf) of thrust the engine produces at that minimum point.

"Low fan pressure ratio" is the pressure ratio across the fan blade alone, without a Fan Exit Guide Vane ("FEGV") system. The low fan pressure ratio as disclosed herein according to one non-limiting embodiment is less than about 1.50. In another non-limiting embodiment the low fan pressure ratio is less than about 1.45.

"Low corrected fan tip speed" is the actual fan tip speed in ft/sec divided by an industry standard temperature correction of [(Tram °R) / 518.7)^{0.5}]. The "Low corrected fan tip speed", as disclosed herein according to one non-limiting embodiment, is less than about 1150 ft/second (350.5 m/s).

The example gas turbine engine includes the fan 42 that comprises in one non-limiting embodiment less than about 26 fan blades. In another non-limiting embodiment, the fan section 22 includes less than about 20 fan blades. Moreover, in one disclosed embodiment the low pressure turbine 46 includes no more than about 6 turbine rotors schematically indicated at 34. In another non-limiting example embodiment the low pressure turbine 46 includes about 3 turbine rotors. A ratio between the number of fan blades 42 and the number of low pressure turbine rotors is between about 3.3 and about 8.6. The example low pressure turbine 46 provides the driving power to rotate the fan section 22 and therefore the relationship between the number of turbine rotors 34 in the low pressure turbine 46 and the number of blades 42 in the fan section 22 disclose an example gas turbine engine 20 with increased power transfer efficiency.

The example gas turbine engine 20 includes a blade health monitoring system 62. The example blade health monitoring system 62 includes at least one sensor 64 that is mounted to a fan case 90 surrounding the plurality of fan blades 42 within the fan section 22. The blade health monitoring system 62 receives signals each time one of the fan blades 42 passes in close proximity to the sensors 64. In this example, a tip 78 of the fan blade 42 passes proximate the sensors 64. The system 62 utilizes the signals for detecting and assessing vibratory modes occurring in each of the fan blades 42.

As appreciated although the example system 62 is described by way of example with regard to fan blades 42 of the fan section 22, other airfoils such as those provided in the compressor and turbine sections 24, 28 are also within the contemplation of this disclosure.

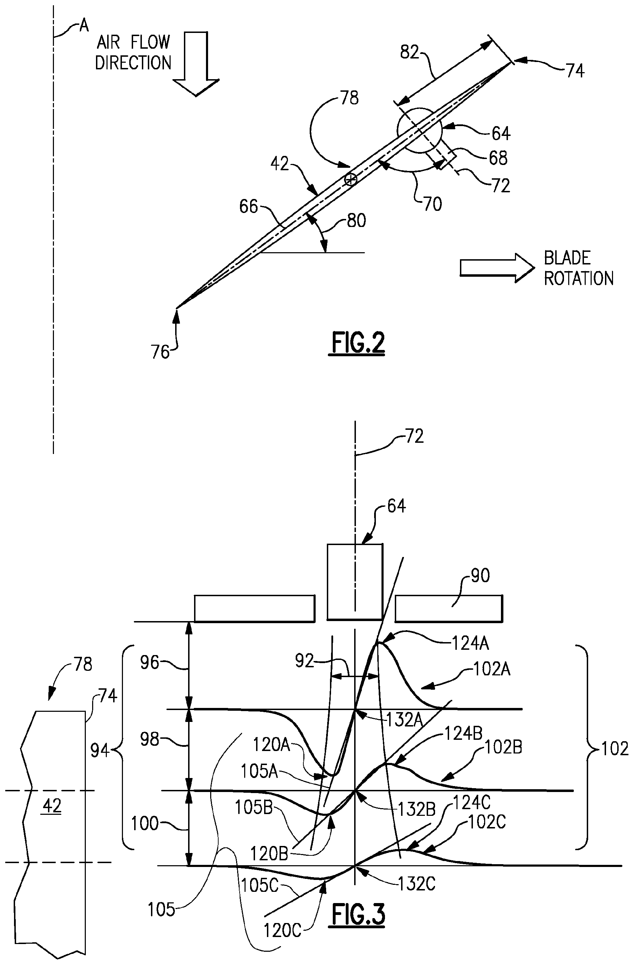

Referring to Figure 2 with continued reference to Figure 1, an example fan blade 42 is shown in a view directed radially outward along the blade 42 towards the fan case 90 and the sensor 64. The fan blade 42 includes a leading edge 74 and a trailing edge 76. A fan blade chord 66 extends between the leading edge 74 and trailing edge 76 and is disposed at a nominal angle 80 relative to the direction of blade rotation. Blade rotation and airflow are disposed transverse to one another. The nominal blade angle in this example is approximately 25°. The blade angle is a position that is determined to provide the desired propulsive efficiency of the fan section 22 and may be disposed at other angles than is described in the disclosed example. The example sensor 64 includes a connector 68 that extends along a sensor axis 72. In this example, the sensor axis 72 is disposed at an angle 70 relative to the blade chord 66. In this example, the angle 70 is normal to the blade chord 66 such that the blade 42 proceeds past the sensor centerline 72 at an angle as it rotates about the engine axis A. The sensor 64 is also disposed within the fan case 90 and mounted such that it detects a portion of the fan blade 42 at a location spaced at a distance 82 from the leading edge 74. Although an example distance 82 is disclosed, other distance and relative angular orientation relative to the fan blade 42 may be utilized for the sensor within the contemplation of this disclosure.

Referring to Figure 3, with continued reference to Figure 2, the example sensor 64 can be any known sensor and is located within the fan case 90 radially outboard of the fan blade 42. It should be understood that any sensor configuration for sensing the presence and path of a fan blade are also within the contemplation of this disclosure. Moreover, although two sensors are shown in Figure 1, the disclosed system and method may operate with one or more sensors 64 within the contemplation of this disclosure.

The sensor 64 registers the presence of the fan blade tip 78 as it passes the sensor 64 during rotation about the axis A and generates a signal 102. A signal level 94 of the signal 102 is indicative of a distance between the tip 78 of the fan blade 42 and the sensor 64. The example signal 102 is an electrical signal such as a current or voltage produced by the sensor 64 and communicated to the system 62. In this example, passing of the tip 78 of the fan blade 42 past the sensor 64 generates a sine wave shaped signal 102 indicative of a path of the fan blade 42. As the tip 78 of the fan blade 42 becomes spaced a greater distance away from the sensor 64, the slope 105 of the signal 102 at a zero crossing point decreases.

Amplitude of the slope 105 at the zero crossing point 132 decreases as the distance between the sensor 64 and the fan blade 42 increases. Accordingly, the signal generated by the sensor 64 can be utilized to determine a distance of the tip 78 of the fan blade 42 from the fan case 90 and the sensor 64. For example a clipped blade 42 may result in a different signal 130 with a different negative peak 122.

In this example, a first signal 102A is indicative of a fan blade 42 that is disposed within a range of signal levels indicated by the range 96. A second range 98 representing a range of distances of the fan blade tip 78 from the sensor 64 produces example signal 102B. A third signal 102C is disposed within a third range 100 representing a range of distances furthest away from the sensor 64. Accordingly, each of the example signals 102A, 102B and 102C are indicative of the path of the tip 78 of the fan blade 42 that passes by the sensor 64.

The example blade path is disclosed as including a radial distance from the sensor 64 that may change during operation. It should be understood that the blade path may also change in other directions and orientations relative to the sensor 64, for example an axial position or angle of the blade may change during operation during operation.

Similar effects of changing signal slope at the zero-crossing 132 will be observed when the airfoil 42 slowly (over multiple revolutions) shifts axially relative to the sensor such that a thicker or thinner portion of the airfoil 42 will be traversed. Such a shift is commonly observed and can be caused by bearing play as well as transitions between cold and hot where the blade undergoes loading/unloading because the airfoil 42 moves axially along the axis A. Separating axial shift from radial distance changes and other features than slope may be required (e.g. positions of positive and negative peaks, or signal asymmetry feature, or other features that can be extracted from the full signal for this purpose).

Each of the signals 102A, 102B, and 102C include a corresponding slope 105A, 105B, and 105C at the corresponding zero crossing point 132A, 132B, and 132C. As the tip 78 becomes further spaced apart from the sensor 64, the corresponding slope 105A, 105B and 105C decreases. Accordingly, the distance of the tip 78 from the sensor 64 is determined at least in part by analysis of a slope 105 of the signal 102 at the zero crossing point 132.

Each signal 102 includes a negative peak 120 and the positive peak 124 and a distance 92 between the negative peak 120 and the positive peak 124, which increases as a distance between the tip 78 and the sensor 64 increases. In this example, the distance 92 expands as the signal level 94 indicates an increased spacing between the tip 78 of the fan blade 42 and the sensor 64.

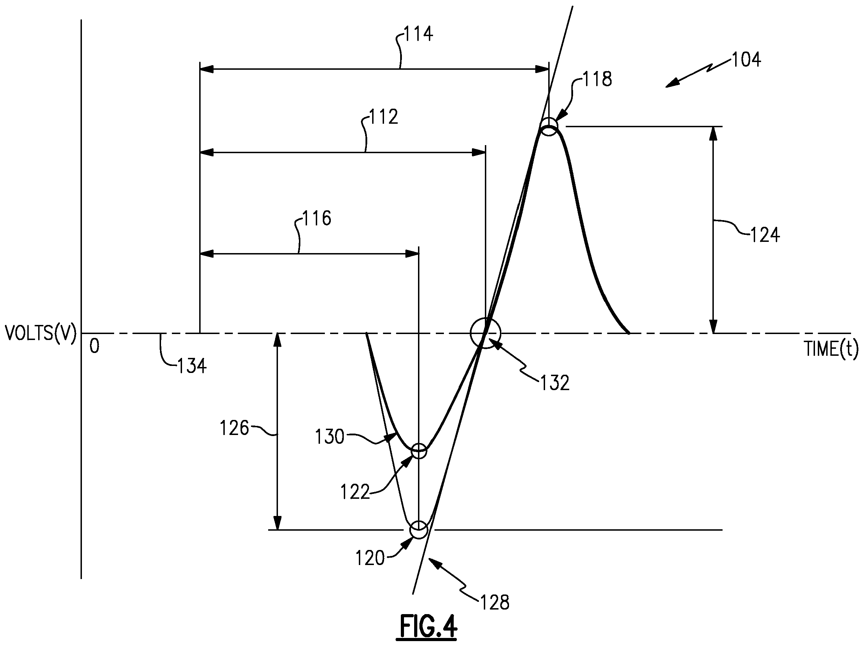

Referring to Figure 4 with continued reference to Figure 3, an example signal 104 generated by the sensor 64 is indicative of a path of the fan blade 42. The example signal is a sine wave sampled over a defined time period and is represented by a voltage over a given time period. Each sine wave represents the passing of one of the blades 42 past the sensor 64. Accordingly, each blade 42 produces an individual signal 104 for each pass by each of the sensors 64. The example system 62 gathers signals 104 for each of the blades 42 for assessing vibratory modes and structural health. Moreover, the signal generated by the sensor 64 can be utilized to determine a distance of the tip 78 of the fan blade 42 from the fan case 90 and the sensor 64. For example a clipped blade 42 may result in a different signal 130 with a different negative peak 122.

The signal 104 is generated by the sensor 64 and indicates the path of a tip 78 of the fan blade 42 and includes the negative peak 120 as the fan blade 42 approaches the axis 72 of the sensor 64. As the fan blade 42 passes by the sensor 64, the signal 104 becomes positive and crosses a zero voltage line 134. The slope 128 of the signal 104 at the zero crossing point 132 is one of several signal features analyzed to facilitate a determination of fan blade health. The signal 104 increases to a positive peak 118 and then falls off as the blade 42 continues past the sensor 64.

The signal 104 is utilized by the example blade heath monitoring system 62 to determine specific information indicative of blade operation and vibratory modes. As appreciated vibratory modes detected in fan blades 42 of a gas turbine engine are produced by many operational phenomenon including steady flows, inlet distortion, turbulence, ground vortices and other operational parameters that occur during operation of the gas turbine engine.

Blade vibration is a normal and unavoidable aspect of jet engine operation. Blades do not enter service until it can be demonstrated that vibratory response levels are well within safe and allowable levels. During service, it is possible for the blades to become damaged. If left undetected, this damage can progress and cause fracture of the part. One means of detecting this damage is through changes in the blade vibratory responses (e.g., the appearance of a new response, the disappearance of a response, a change in frequency, amplitude, or shape of a vibratory response). The present invention augments existing blade "time-of-arrival" systems by relating observed signal at a particular sensor to the specific vibratory modes occurring in operation. This addresses one of the long-standing difficulties in using time-of-arrival systems for prognostic health monitoring applications (i.e., knowing what it is that is being measured).

As speed of the fan section 22 increases, the frequency at which exciting forces occur also changes (usually increases). Peak stresses occur when the excitation frequency becomes equal to a mode natural frequency of a specific fan blade 42. Once identified, the specific frequencies and vibratory modes of the fan blade 42 are utilized for assessing fan blade health for inspection and maintenance purposes. Therefore, data obtained and determined by the system 62 during engine operation is utilized to assess fan blade health to focus inspection and maintenance efforts that reduce time and cost. Moreover, engine operational data such as for example, rotational speeds of the airfoil or fan blade can be combined with the waveform data to determine and identify expected as well as actual vibratory modes. As appreciated, by determining and accessing fan blade health, inspection and maintenance can be implemented on an as-needed basis rather than based on a specific time period without knowledge of actual performance of the gas turbine engine and the fan blades 42.

Accordingly, the example blade health monitoring system 62 utilizes the signals 104 provided by the sensor 64 to determine and detect specific categories of vibratory modes in each of the fan blades 42. Detection and categorization of specific vibratory modes experienced by a fan blade 42 provide for targeted maintenance actions and corrective measures.

The example system 62 utilizes signals 104 to determine several parameters that are indicative of specific vibratory modes. The specific vibratory modes are in turn indicative of a specific condition of the fan blade 42.

In this example, the signal 104 includes the negative peak 120 followed by an upward slope 128 through the zero crossing point 132 to the positive peak 118, however other signal shapes are possible (e.g., positive peaks followed by a zero crossing and subsequent negative peak). As should be understood, although the example signal 104 is represented as a sine wave, other forms of the signal could be obtained and utilized for identifying vibratory modes of a blade. For example a bell curve, or other shapes could be obtained and utilized depending on application specific requirements.

A time of arrival of the fan blade 42 value is determined and utilized to determine blade health. In this example, the time of arrival indicated at 112, is utilized with a predicted time of arrival to determine if the fan blade 42 is under vibratory stresses. Vibratory stresses can change or vary the expected time of arrival 112. The example blade health monitoring system 62 extracts additional information from the signal 104.

In this example, data obtained from the signal 104 includes the slope 128 at the zero crossing point 132 along with the time 114 to the positive peak 118, time to the negative peak 116, and magnitudes of the positive peaks and negative peak 124, 126. The signal 104 is utilized to determine not only time of arrival, but also to determine key features of the signal 104 including positive and negative peaks times 116, 114, positive and negative peak levels 124, 126 and the slope 128 at the zero crossing point 132. Each of these values provides a characteristic of the signal 104 that is utilized to identify vibratory modes of a specific fan blade 42.

The specific characteristics of the signal 104, such as the time of arrival and the other key features obtained from the signal 104 are utilized to derive and develop an understanding of the fan blade vibratory response. A model is generated by obtaining and compiling data provided by the sensor 64 that form the signals 104 along with inspection and other maintenance data that are indicative of certain vibratory modes of the fan blade. Moreover, the model is generated by associating specific signal shapes and signatures with modeled vibratory modes encountered by the fan blade 42.

The model can be generated and/or trained, during the development and testing stage of engine development by comparing responses of chosen key features to the blade vibratory modes that are concurrently and independently assessed through sensors that are calibrated and have a higher probe count than would be utilized in a final application on a production engine.

The example disclosed system utilizes a model including a plurality of signal shapes and signatures that includes variations and combinations of the key features and time of arrival values as they correspond with specific vibratory modes of the fan blade 42. The example blade health monitoring system 62 then matches the obtained signal data with known vibratory modes to identify the response and assess blade health.

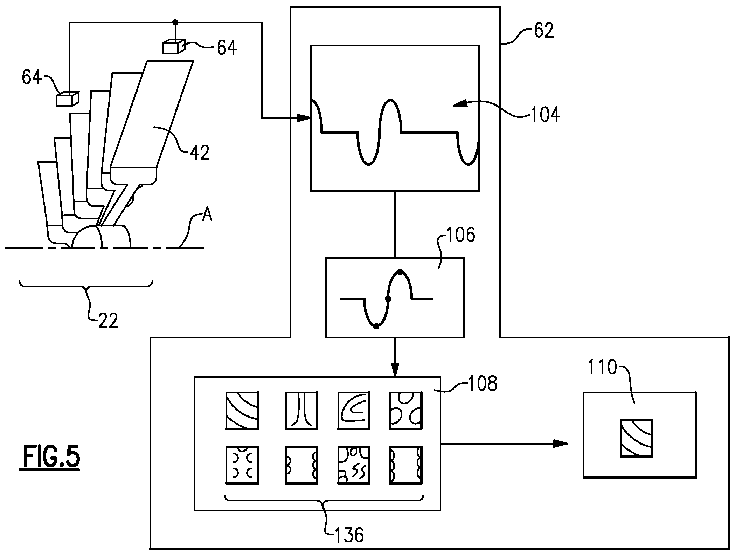

Referring to Figure 5, with continued reference to Figure 4, in operation the example blade health monitoring system 62 obtains information from the sensors 64 that are mounted within the case 90. The example blade health monitoring system 62 can be a stand-alone system or incorporated within a controller of the engine. The example system 62 includes a controller with various modules to provide the desired functions.

The blade health monitoring system 62 includes a first module 106 that obtains the signal 104 as a waveform from the sensor 64 and identifies key features of that wave form. In this example, the key features include the time of arrival of the fan blade 42 along with the positive and negative peak times114, 116 and magnitudes 124, 126 and slope 128 at the zero crossing 132. It should be understood, that although several example key features are disclosed and by way of example, other features of the signal and wave form could be utilized and are within the contemplation of this disclosure. Examples of other features could include, among other possible things, features from the sensor signal transformed into other domains (e.g. frequency domain, wavelet domain). All of these features are determined for a specific signal indicative of operation of one of the plurality of blades 42 within the fan section 22. The information is determined in the first module 106 and then forwarded to a model 108.

In this example, the model 108 includes a plurality of historical analytical and derived data that associate the parameters determined in the first module 106 with vibratory modes 136. Accordingly, for combinations and variations of the key features determined from the signal 104, the model 108 associates a specific one or combination of several of the vibratory modes 136 of the fan blade 42. For some airfoil operating conditions there might be several vibratory modes that are active simultaneously and that could be indicative of airfoil health. Vibratory modes with lower apparent vibratory amplitudes could sometimes be generating higher stress on the airfoil. Model 108 with high enough count of key features is used in this disclosure to identify all active modes and provide their parameters for detecting existing or impending failures through blade health diagnostic and prognostics.

The example model 108 is derived and built utilizing experimental model data and expected vibratory modes 136 that correspond with the determined signal parameters. The model 108 is then able to match one or several of the vibratory modes 136 with the signal 104 to determine the vibratory mode indicated schematically at 110 that best corresponds with current blade operational condition. Depending on the specific vibratory mode identified by the model 108, corrective action if required of the fan blade 42 is determined and scheduled.

Accordingly, the example blade health monitoring system utilizes signals from the sensor to derive additional key featured data that can be utilized to identify specific vibratory modes experienced by one of the example fan blades 42.

Although an example embodiment has been disclosed, a worker of ordinary skill in this art would recognize that certain modifications would come within the scope of this disclosure. For that reason, the following claims should be studied to determine the scope and content of this disclosure.

## Claims

1. A method of monitoring a condition of a rotating airfoil (42) comprising:
obtaining a signal comprising a waveform indicative of an airfoil path past a sensor (64);
determining at least two features of the waveform;
comparing the at least two features of the waveform to predetermined waveform characteristics indicative of a vibrational mode; and
identifying a vibrational mode of the airfoil (42) based on the comparison between the predetermined waveform characteristics and the waveform indicative of the airfoil path, **characterised by** generating a model of a plurality of airfoil vibratory modes that correspond with a time of arrival and at least one of a time of positive and negative peaks of the signal and a slope of the signal at a zero crossing point, and identifying the vibrational mode of at least one fan blade (42) based on the generated model.

2. The method as recited in claim 1, wherein the at least two features of the waveform include the time of arrival of an airfoil (42) based on the signal.

3. The method as recited in claim 1 or 2, wherein the at least two features include the slope of the signal at the zero crossing point.

4. The method as recited in claim 3, including determining a distance between the sensor (64) and a tip (78) of the airfoil (42) based on a value of the slope of the signal at the zero crossing point.

5. The method as recited in any preceding claim, wherein the at least two features of the waveform include the time of positive and negative peaks of the signal.

6. The method as recited in claim 5, including determining a magnitude of the positive and negative peaks.

7. The method as recited in claim 5 or 6, including determining a distance between the positive peak and the negative peak and identifying the vibrational mode based in part on the determined distance.

8. The method as recited in any preceding claim, wherein the rotating airfoil (42) comprises a fan blade (42) and including mounting at least one point sensor (64) proximate to a tip (78) of the fan blade (42).

9. A system for identifying vibratory modes of rotating airfoils (42) comprising:
at least one sensor (64) for obtaining a signal indicative of an airfoil rotational path; and
a controller including;
a first module for determining data from the signal including a time of arrival, a time of positive and negative peaks, and a slope of the signal at a zero crossing point;
a model defining vibratory modes in view of values of data obtained from a signal indicative of the airfoil rotational path; and
an identification module for determining a vibratory mode of an airfoil (42) by comparing the signal indicative of an airfoil rotational path to the defined vibratory modes of the model, wherein the model further defines a distance between the sensor (64) and a tip (78) of the airfoil (42) based on a difference between the positive and negative peaks and a slope of the signal at a zero crossing point.

10. The system as recited in claim 9, wherein the model includes a database of information derived from previously obtained signals indicative of an airfoil rotational path.

11. The system as recited in claim 9 or 10, wherein the sensor (64) comprises a sensor mounted radially outward of an airfoil tip path.

12. The system as recited in claim 9, 10 or 11, wherein the sensor (64) is mounted to sense a portion of a tip distance from one of a leading edge and trailing edge of the airfoil.

13. The system as recited in any of claims 9 to 12, wherein the first module further determines a magnitude of the positive and negative peaks.

14. A gas turbine engine (20) comprising:
a fan section (22) comprising a plurality of fan blades (42) rotatable about an axis;
a compressor section (24) compressing air fed from the fan section (22);
a combustor (56) receiving compressed air from the compressor section (24), combining the compressed air with fuel and igniting the air/fuel mixture to generate a high velocity gas stream;
a turbine (46,54) driven by the high velocity gas stream for driving the compressor (24) and the fan section (22); and
the system of any of claims 9 to 13, wherein the sensor (64) is disposed radially outward of a rotary path of the plurality of fan blades (42) for generating a signal indicative of a fan blade tip path; and
the controller utilizes the determined data to identify at least one vibrational mode of at least one of the plurality of fan blades (42).

## Patentansprüche

1. Verfahren zum Überwachen eines Zustands einer sich drehenden Turbinenschaufel (42), umfassend:
Erhalten eines Signals, das eine Wellenform umfasst, die einen Weg der Turbinenschaufel vorbei an einem Sensor (64) anzeigt;
Bestimmen von mindestens zwei Merkmalen der Wellenform;
Vergleichen der mindestens zwei Merkmale der Wellenform mit vorher festgelegten Wellenformeigenschaften, die einen Schwingungsmodus anzeigen; und
Erkennen eines Schwingungsmodus der Turbinenschaufel (42) auf Grundlage des Vergleichs zwischen den vorher festgelegten Wellenformeigenschaften und der Wellenform, die den Weg der Turbinenschaufel anzeigt, **dadurch gekennzeichnet, dass** ein Modell einer Vielzahl von Schwingungsmodi der Turbinenschaufel, die einem Ankunftszeitpunkt und mindestens einem von einem Zeitpunkt eines positiven und eines negativen Scheitelpunkts des Signals und einer Neigung des Signals an einem Nulldurchgangspunkt entsprechen, erstellt wird und der Schwingungsmodus mindestens einer Gebläseschaufel (42) auf Grundlage des erstellten Modells erkannt wird.

2. Verfahren nach Anspruch 1, wobei die mindestens zwei Merkmale der Wellenform den Ankunftszeitpunkt einer Turbinenschaufel (42) auf Grundlage des Signals beinhalten.

3. Verfahren nach Anspruch 1 oder 2, wobei die mindestens zwei Merkmale die Neigung des Signals am Nulldurchgangspunkt beinhalten.

4. Verfahren nach Anspruch 3, beinhaltend das Bestimmen eines Abstands zwischen dem Sensor (64) und einer Spitze (78) der Turbinenschaufel (42) auf Grundlage eines Neigungswerts des Signals am Nulldurchgangspunkt.

5. Verfahren nach einem der vorhergehenden Ansprüche, wobei die mindestens zwei Merkmale der Wellenform den Zeitpunkt eines positiven und eines negativen Scheitelpunkts des Signals beinhalten.

6. Verfahren nach Anspruch 5, beinhaltend das Bestimmen einer Größenordnung des positiven und des negativen Scheitelpunkts.

7. Verfahren nach Anspruch 5 oder 6, beinhaltend das Bestimmen eines Abstands zwischen dem positiven Scheitelpunkt und dem negativen Scheitelpunkt und das Erkennen des Schwingungsmodus teilweise auf Grundlage des bestimmten Abstands.

8. Verfahren nach einem der vorhergehenden Ansprüche, wobei die sich drehende Turbinenschaufel (42) eine Gebläseschaufel (42) umfasst und das Verfahren das Montieren mindestens eines Sensors (64) nahe einer Spitze (78) der Gebläseschaufel (42) beinhaltet.

9. System zum Erkennen von Schwingungsmodi von sich drehenden Turbinenschaufeln (42), umfassend:
mindestens einen Sensor (64) zum Erhalten eines Signals, das einen Drehweg der Turbinenschaufel anzeigt; und
eine Steuerung, die Folgendes beinhaltet:
ein erstes Modul zum Bestimmen von Daten aus dem Signal, einschließlich eines Ankunftszeitpunkts, eines Zeitpunkts eines positiven und eines negativen Scheitelpunkts und einer Neigung des Signals an einem Nulldurchgangspunkt;
ein Modell, das unter Berücksichtigung von Datenwerten, die aus einem Signal erhalten werden, das den Drehweg der Turbinenschaufel anzeigt, Schwingungsmodi definiert; und
ein Erkennungsmodul zum Bestimmen eines Schwingungsmodus einer Turbinenschaufel (42) durch Vergleichen des Signals, das einen Drehweg der Turbinenschaufel anzeigt, mit den definierten Schwingungsmodi des Modells, wobei das Modell ferner einen Abstand zwischen dem Sensor (64) und einer Spitze (78) der Turbinenschaufel (42) auf Grundlage eines Abstands zwischen dem positiven und dem negativen Scheitelpunkt und einer Neigung des Signals an einem Nulldurchgangspunkt definiert.

10. System nach Anspruch 9, wobei das Modell eine Datenbank mit Informationen beinhaltet, die aus zuvor erhaltenen Signalen, die einen Drehweg der Turbinenschaufel anzeigen, abgeleitet sind.

11. System nach Anspruch 9 oder 10, wobei der Sensor (64) einen Sensor umfasst, der radial außerhalb eines Drehwegs der Turbinenschaufel montiert ist.

12. System nach Anspruch 9, 10 oder 11, wobei der Sensor (64) derart montiert ist, dass er einen Teil eines Spitzenabstands von entweder einer Vorderkante oder einer Hinterkante der Turbinenschaufel erfasst.

13. System nach einem der Ansprüche 9 bis 12, wobei das erste Modul ferner eine Größenordnung des positiven und des negativen Scheitelpunkts bestimmt.

14. Gasturbinentriebwerk (20), umfassend:
einen Gebläseabschnitt (22), der eine Vielzahl von Gebläseschaufeln (42) umfasst, die um eine Achse drehbar ist;
einen Verdichterabschnitt (24), der aus dem Gebläseabschnitt (22) zugeführte Luft verdichtet;
eine Brennkammer (56), die verdichtete Luft aus dem Verdichterabschnitt (24) empfängt, die verdichtete Luft mit Treibstoff kombiniert und das Luft/Kraftstoff-Gemisch zündet, um einen Gasstrom mit hoher Geschwindigkeit zu erzeugen;
eine Turbine (46, 54), die durch den Gasstrom mit hoher Geschwindigkeit angetrieben wird, um den Verdichter (24) und den Gebläseabschnitt (22) anzutreiben; und
das System nach einem der Ansprüche 9 bis 13, wobei der Sensor (64) radial außerhalb eines Drehwegs der Vielzahl von Gebläseschaufeln (42) angeordnet ist, um ein Signal zu erzeugen, das einen Weg der Gebläseschaufelspitze anzeigt; und
die Steuerung die bestimmten Daten verwendet, um mindestens einen Schwingungsmodus mindestens einer der Vielzahl von Gebläseschaufeln (42) zu erkennen.

## Revendications

1. Procédé de contrôle de l'état d'un profil aérodynamique rotatif (42) comprenant :
l'obtention d'un signal comprenant une forme d'onde indiquant un trajet de profil aérodynamique après un capteur (64) ;
la détermination d'au moins deux éléments de la forme d'onde ;
la comparaison des au moins deux éléments de la forme d'onde à des caractéristiques de forme d'onde prédéterminées indiquant un mode vibrationnel ; et
l'identification d'un mode vibrationnel du profil aérodynamique (42) sur la base de la comparaison entre les caractéristiques de forme d'onde prédéterminées et la forme d'onde indiquant le trajet de profil aérodynamique,
**caractérisé par** la génération d'un modèle d'une pluralité de modes vibrationnels de profil aérodynamique qui correspond à une heure d'arrivée et au moins l'un d'une heure de pics positifs et négatifs du signal et d'une pente du signal à un point d'intersection avec le zéro, et l'identification du mode vibrationnel d'au moins une pale de ventilateur (42) sur la base du modèle généré.

2. Procédé selon la revendication 1, dans lequel les au moins deux éléments de la forme d'onde comprennent l'heure d'arrivée d'un profil aérodynamique (42) sur la base du signal.

3. Procédé selon la revendication 1 ou 2, dans lequel les au moins deux éléments comprennent la pente du signal au point d'intersection avec le zéro.

4. Procédé selon la revendication 3, comprenant la détermination d'une distance entre le capteur (64) et une pointe (78) du profil aérodynamique (42) sur la base d'une valeur de la pente du signal au point d'intersection avec le zéro.

5. Procédé selon une quelconque revendication précédente, dans lequel les au moins deux éléments de la forme d'onde comprennent l'heure de pics positifs et négatifs du signal.

6. Procédé selon la revendication 5, comprenant la détermination de l'amplitude des pics positifs et négatifs.

7. Procédé selon la revendication 5 ou 6, comprenant la détermination d'une distance entre le pic positif et le pic négatif et l'identification du mode vibrationnel sur la base, en partie, de la distance déterminée.

8. Procédé selon une quelconque revendication précédente, dans lequel le profil aérodynamique rotatif (42) comprend une pale de ventilateur (42), le procédé comprenant le montage d'au moins un capteur ponctuel (64) près d'une pointe (78) de la pale de ventilateur (42).

9. Système d'identification des modes vibrationnels de profils aérodynamiques rotatifs (42) comprenant :
au moins un capteur (64) servant à obtenir un signal indiquant un trajet rotatif de profil aérodynamique ; et
un dispositif de commande comprenant :
un premier module servant à déterminer des données à partir du signal comprenant une heure d'arrivée, une heure de pics positifs et négatifs, et une pente du signal à un point d'intersection avec le zéro ;
un modèle définissant des modes vibrationnels compte tenu de valeurs de données obtenues à partir d'un signal indiquant le trajet rotatif de profil aérodynamique ; et
un module d'identification servant à déterminer un mode vibrationnel d'un profil aérodynamique (42) en comparant le signal indiquant un trajet rotatif de profil aérodynamique aux modes vibrationnels définis du modèle, le modèle définissant en outre une distance entre le capteur (64) et une pointe (78) du profil aérodynamique (42) sur la base d'une différence entre les pics positifs et négatifs et d'une pente du signal à un point d'intersection avec le zéro.

10. Système selon la revendication 9, dans lequel le modèle comprend une base de données d'informations dérivées de signaux obtenus précédemment indiquant un trajet rotatif de profil aérodynamique.

11. Système selon la revendication 9 ou 10, dans lequel le capteur (64) comprend un capteur monté radialement à l'extérieur d'un trajet de la pointe du profil aérodynamique.

12. Système selon la revendication 9, 10 ou 11, dans lequel le capteur (64) est monté de manière à détecter une partie de la distance entre une pointe et l'un d'un bord d'attaque et d'un bord de fuite du profil aérodynamique.

13. Système selon l'une quelconque des revendications 9 à 12, dans lequel le premier module détermine en outre l'amplitude des pics positifs et négatifs.

14. Moteur à turbine à gaz (20) comprenant :
une partie ventilateur (22) comprenant une pluralité de pales de ventilateur (42) pouvant tourner autour d'un axe ;
une partie compresseur (24) comprimant l'air amené de la partie ventilateur (22) ;
une chambre de combustion (56) recevant l'air comprimé provenant de la partie compresseur (24), combinant l'air comprimé à un combustible et allumant le mélange air/combustible afin de générer un flux gazeux à grande vitesse ;
une turbine (46,54) entraînée par le flux gazeux à grande vitesse afin d'entraîner le compresseur (24) et la partie ventilateur (22) ; et
le système selon l'une quelconque des revendications 9 à 13,
le capteur (64) étant disposé radialement à l'extérieur d'un trajet rotatif de la pluralité de pales de ventilateur (42) afin de générer un signal indiquant un trajet de pointe de pale de ventilateur ; et
le dispositif de commande utilise les données déterminées pour identifier au moins un mode vibrationnel d'au moins un de la pluralité de pales de ventilateur (42).
